Europäisches Patentamt

European Patent Office

Office européen des brevets

(19)

(11) Veröffentlichungsnummer : **0 039 397**
**B1**

(12) **EUROPÄISCHE PATENTSCHRIFT**

(45) Veröffentlichungstag der Patentschrift :
05.06.85

(21) Anmeldenummer : 81101751.6

(22) Anmeldetag : 10.03.81

(51) Int. Cl.⁴ : **C 08 L 23/14, C 08 L 23/16**

(54) .Ternäre thermoplastische Formmasse enthaltend Propylen-Mischpolymere.

(30) Priorität : 02.04.80 DE 3012804

(43) Veröffentlichungstag der Anmeldung :
11.11.81 Patentblatt 81/45

(45) Bekanntmachung des Hinweises auf die Patenterteilung : 05.06.85 Patentblatt 85/23

(84) Benannte Vertragsstaaten :
AT BE CH DE FR GB IT LI LU NL SE

(56) Entgegenhaltungen :
EP-A- 0 006 620
DE-A- 2 640 850
DE-A- 2 644 644
DE-A- 2 821 342

(73) Patentinhaber : DYNAMIT NOBEL AKTIENGESELLS-
CHAFT
Postfach 1209
D-5210 Troisdorf, Bez. Köln (DE)

(72) Erfinder : Spielau, Paul, Dr.
Van-Gogh-Platz 10
D-5210 Troisdorf-Eschmar (DE)
Erfinder : Kühnel, Werner
D-5206 Neunkirchen-Schöneshof (DE)
Erfinder : Welsch, Dietmar
Schlesische Strasse 6
D-8832 Weissenburg/Bay (DE)
Erfinder : Klingberg, Gerd
Heckenweg 17
D-5204 Lohmar 1 (DE)
Erfinder : Konermann, Hans-Ewald, Dr.
Kiefernstrasse 2
D-5210 Troisdorf (DE)
Erfinder : Leeder, Wilfried
Petersbergstrasse 11
D-5210 Troisdorf (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine ternäre Formmasse auf Basis von Ethylen-Propylen-Mischpolymerisat, Propylen-Mischpolymer und Polyethylen.

Aus der EP-A 6 620 sind ternäre Formmassen der gattungsgemäßen Art bekannt, die sich durch gute Schlagfestigkeit bei hohen Anteilen von Polypropylen von 60 bis 90 %, vorzugsweise über 65 %, auszeichnen.

Polypropylen besitzt neben einigen sehr günstigen Eigenschaften, wie beispielsweise einer relativ niedrigen Dichte, einer ausgezeichneten Beständigkeit gegen höhere Temperaturen und wässrigen und nichtwässrigen Flüssigkeiten, auch weniger günstige Eigenschaften, wozu die mangelhafte Schlagfestigkeit bei Temperaturen unterhalb Raumtemperatur, insbesondere unterhalb 0 °C zu zählen ist. Ausreichende Schlagfestigkeit, ist jedoch für viele Anwendungen, wie z. B. für Transportkästen, Koffer, Automobilteile und ähnliche erforderlich und von Bedeutung.

Polyethylen hoher Dichte, aus welchem man derartige Formteile gewöhnlich herstellt, besitzt zwar diese gute hohe Schlagfestigkeit, zeigt jedoch eine geringere Beständigkeit gegen hohe Temperaturen.

Ethylen-Propylen-Mischpolymerisate, sowohl die gesättigten als auch die ungesättigten, weisen neben guten mechanischen Eigenschaften hohe Alterungs- und Ozonfestigkeit und Kältefestigkeit auf, so daß sie insbesondere auch für der Bewitterung ausgesetzte Anwendungen hervorragend geeignet sind. Wegen ihrer kautschukartigen Eigenschaften versetzt man sie gerne mit härteren Polymeren.

Man hat nun vielfach versucht, die Eigenschaften von Polypropylen und/oder Polyethylen und/oder Ethylen-Propylen-Mischpolymerisaten (EPM) durch Herstellen binärer oder ternärer Formmassen zu verbinden. Beispielsweise ist es bekannt, Gemische aus Polypropylen und Polyethylen zu verwenden, die jedoch eine kaum verbesserte Schlagfestigkeit im Vergleich zu Polypropylen allein besitzen. Die DE-OS 22 02 706 und 22 02 738 zeigen Abmischungen aus isotaktischem Polypropylen und Ethylen-Propylen-Kautschuken, die entweder durch Zugabe von Vulkanisationsmitteln nach der Abmischung teilvernetzt werden oder bei deren Herstellung bereits teilvernetztes EPM eingesetzt wird. Solche Mischungen sind jedoch in Bezug auf die erreichbaren Zugfestigkeitswerte, die Bruchdehnungswerte, die Weiterreißfestigkeiten sowie die Härtewerte, gemessen bei 100 °C für viele Anwendungsfälle noch verbesserungsbedürftig, d. h. sie genügen den gestellten Anforderungen nicht für alle Anwendungsfälle.

Abmischungen von Polyethylen mit EPDM-Polymeren, deren Kristallinität zwischen 10 bis 20 % liegt, sind aus der US-PS 39 19 358 bekannt. Derartige Produkte besitzen zwar hohe Reißfestigkeiten, aber wegen der niedrigen Schmelztemperatur des Polyethylens keine ausreichende Wärmebeständigkeit, auch die bleibende Verformung, die Steifigkeit und die Härte sind unbefriedigend.

Aus der DE-OS 27 32 969 ist eine binäre Formmasse aus unvernetzten Ethylen-Propylen-Sequenz-Polymeren mit isotaktischem Polypropylen bekannt. Es hat sich jedoch gezeigt, daß solche Abmischungen unter anderem eine relativ große Schrumpfung beim Spritzgießen erfahren, so daß es oft schwierig ist, maßhaltige Formteile zu spritzen aufgrund der großen Nachschwindung ; dies gilt insbesondere für komplizierte Formteile.

Aus der GB-PS 11 54 447 bekannte ternäre Formmasse enthaltend 50 bis 90 Gew.-% kristallines Polypropylen, das zu mehr als 90 Gew.-% in n-Heptan unlöslich ist, und 5 bis 30 Gew.-% Polyethylen und 5 bis 40 Gew.-% Ethylen-Propylen-Block-Copolymer, das in n-Heptan zu 80 Gew.-% unlöslich ist, weist eine Zugfestigkeit auf, die bei nur 10 N/mm² liegt und die bei Temperaturen unter − 30 °C nicht mehr flexibel ist.

Aus der DE-OS 27 42 910 hingegen ist ein thermoplastisches Elastomergemisch aus 25 bis 85 Gew.-% eines praktisch amorphen Ethylen-Propylen-Mischpolymerisates und 15 bis 75 Gew.-% eines kristallinen Blockmischpolymerisates von Propylen und ggf. zusätzlichem Polyethylen bekannt. Wie in der DE-OS 28 21 342 ausgeführt, ist diese Formmasse in Bezug auf die Härte, die Zugfestigkeit, bessere Beständigkeit gegen hohe Temperaturen verbesserungsbedürftig, und wird beispielsweise in diesen Eigenschaften durch eine Formmasse gem. der DE-OS 28 21 342 übertroffen, wie die Tabelle 1, der DE-OS 28 21 342 nachweist.

Aus der DE-OS 28 21 342 sind thermoplastische Elastomer-Gemische enthaltend 30 bis 75 Teile kristallines isotaktisches Propylen-Homopolymerisat und 25 bis 70 Teile eines im wesentlichen amorphen kautschukarten Ethylen-Propylen-Polymerisates und maximal 15 Teile Polyethylen, die anteilig das Propylen-Homopolymerisat ersetzen, bekannt. Diese Gemische weisen gegenüber binären Formmassen teils verbesserte Eigenschaften auf, die sie auch zur Herstellung von Stoßstangen für Kraftfahrzeuge geeigneter machen. Es hat sich jedoch gezeigt, daß für extreme Beanspruchungen, die mechanischen Eigenschaften der aus der DE-OS 28 21 342 bekannten ternären Elastomer-Gemische insbesondere was die Kerbschlag-Zähigkeit und Kälteflexibilität angeht, noch verbesserungsbedürftig ist.

Der Erfindung liegt die Aufgabe zugrunde, eine thermoplastische Formmasse zu schaffen, die hohe Wärmebeständigkeit, gute mechanische Eigenschaften, insbesondere Zugfestigkeiten, hohe Kälteflexibilität d. h. Kerbschlagzähigkeit bei tiefen Temperaturen aufweist und darüber hinaus pelletisierbar ist und insgesamt gegenüber den bekannten binären und ternären Formmassen in Bezug auf eine oder mehrere Eigenschaften verbessert ist. Es ist auch ein Anliegen der Erfindung, mit einfachen Mitteln eine solche optimal schlagfeste ternäre Formmasse mit gewünschten Eigenschaften herstellen zu können, die sich nicht zufällig als Randprodukt neben anderen bei bekannten Formmassen einfindet. Die gewünschte

2

Formmasse sollte auch hinsichtlich ihrer Schrumpfung verbessert werden und sich besonders zur Anwendung im Spritzgußverfahren eignen.

Es wurde nun gefunden, daß die vorangehend genannte Aufgabenstellung mit einfachen Mitteln optimal gelöst wird durch eine Formmasse enthaltend

a) 35 bis 43 Gew.-% eines teilkristallinen Ethylen-Propylen-Mischpolymerisates mit einem Ethylengehalt von mindestens 65 Gew.-%, einem Schmelzindex MFI (230/5) von 0,7 bis 2,0 g/10 min und einer Zugfestigkeit größer 5,0 N/mm², 

b) 40 bis 60 Gew.-% Propylen-Mischpolymer mit einem Ethylengehalt von unter 12 Gew.-% und mit einem Schmelzindex MFI (230/5) von 15 bis 50 g/10 min und

c) 5 bis 20 Gew.-% Polyethylen mit einem Schmelzindex MFI (230/5) von 15 bis 50 g /10 min, wobei die Formmasse einen Schmelzindex MFI (230/5) von mindestens 8 g/10 min aufweist.

Es ist völlig überraschend im Hinblick auf die aus den EP-A 6 620, DE-OS 27 42 910 und 28 21 342 bekannten Abmischungen, daß es durch die Erfindung gelingt, unter Einsatz von teilkristallinen Ethylen-Propylen-Mischpolymerisaten mit einer Zugfestigkeit, die mindestens 5,0 N/mm² beträgt, ternäre Formmassen mit hoher Schlagfestigkeit, hoher Wärmeformbeständigkeit, hoher Kerbschlagzähigkeit auch bei teifen Temperaturen von − 40 °C zu schaffen, die sich zudem hervorragend zu Spritzgußformteilen unter Vermeidung von Schrumpf verarbeiten lassen.

Die Kennzeichnung auf Basis der Schmelzindizes erfolgt wegen der hierin enthaltenen Aussage über die Fließfähigkeit der Formmasse, die wesentlich für die Verarbeitbarkeit derselben ist. Die erfindungsgemäße Formmasse soll insbesondere durch Spritzgießen verarbeitbar sein und soll daher einen Schmelzindex MFI (230/5) von mindestens 8 aufweisen.

Das verwendete Ethylen-Propylen-Mischpolymerisat weist vorzugsweise einen Ethylen-Gehalt von mehr als 70 Gew.-% auf. Erfindungsgemäß werden die teilkristallinen Ethylen-Propylen-Mischpolymerisate mit hoher Festigkeit, die auch als Very High Green Strenght-Kautschuke bekannt sind, eingesetzt. Diese Ethylen-Propylen-Mischpolymerisate sind pelletisierbar und verleihen damit insgesamt der Formmasse einen verarbeitungstechnischen Vorteil gegenüber den amorphen oder nahezu amorphen Ethylen-Propylen-Mischpolymerisaten, die nicht pelletisierbar sind, siehe DE-OS 27 42 910. Bevorzugt wird ein Ethylen-Propylen-Mischpolymer und/oder ein Ethylen-Propylen-Terpolymer bestehend aus 65 bis 82 Gew.-% Ethylen, 18 bis 35 Gew.-% Propylen und 0 bis 8 Gew.-% Terkomponente für die Formmasse eingesetzt. Als Terkomponente werden in der Regel Dicyclopentadien, Alkylidennorbonen, Alkenylnorbone, Alkadiene und Cycloalkadiene verwendet. Bevorzugt werden für die Formmasse erfindungsgemäß Ethylen-Propylen-Terpolymere mit einer Mindest-Zugfestigkeit von 8,0 N/mm², vorzugsweise einer über 20 N/mm² liegenden Zugfestigkeit, eingesetzt.

Besonders geeignet für die erfindungsgemäße Formmasse sind Propylen-Mischpolymere mit einem Ethylen-Gehalt unter 12 Gew.-%.

Die erfindungsgemäße ternäre Formmasse ist besonders geeignet zum Herstellen von technischen Formteilen, die einerseits hohen Temperaturen bis 100 °C, aber auch sehr niedrigen Temperaturen unter − 30 °C bei gleichzeitig hohen mechanischen Beanspruchungen ausgesetzt sind.

Ein bevorzugtes Anwendungsgebiet ist das Herstellen von Stoßfängern für Kraftfahrzeuge, die auch noch Stoßbeanspruchungen bei niedrigen Temperaturen bis − 40 °C aushalten müssen. Die erfindungsgemäße Formmasse wird auch diesen extremen Beanspruchungen dadurch gerecht, daß sie einerseits zum Erreichen der erforderlichen Kerbschlag-Zähigkeit bei tiefen Temperaturen einen ausreichenden Anteil von Ethylen-Propylen-Mischpolymerisat aufweist, der jedoch eine gewisse Erniedrigung der Wärmeformbeständigkeit mit sich bringt. Dieser Erniedrigung der Wärmeformbeständigkeit wird durch Einsatz einer erfindungsgemäßen Menge ausgewählter Propylen-Mischpolymere entgegengewirkt, die der Formmasse verbesserte mechanische Eigenschaften bei tiefen Temperaturen und zugleich gute Wärmeformbeständigkeit verleihen. Die Schmelzbereiche der eingesetzten Propylen-Mischpolymere liegen vorzugsweise über 155 °C, bevorzugt zwischen 160 bis 162°. Die eingesetzten Propylen-Mischpolymere haben jedoch den Nachteil, daß sie in Abmischung mit Ethylen-Propylen-Mischpolymerisaten eine relativ große Nachschwindung (Schrumpfung) bei spritzgegossenen Formteilen bewirken. Dieses führt zu Schwierigkeiten bei der Herstellung entsprechender maßhaltiger Spritzgußteile. Überraschend hat sich herausgestellt, daß die dritte Komponente Polyethylen nicht nur ihre sonst bekannten Eigenschaften einbringt, sondern offensichtlich diese Nachschwindung verringert, bis weitgehend ausgleichen kann. Besonders vorteilhaft hat sich ein Polyethylen mit einem MFI (230/5) größer 15, vorzugsweise jedoch zwischen 20 bis 50 erweisen. Vorteilhaft wird hierbei ein Niederdruck-Polyethylen eingesetzt.

Bevorzugte erfindungsgemäße Formmassen, ausgehend von den vorangehend beschriebenen Komponenten mit optimalen Eigenschaften weisen ein Verhältnis der Schmelzindizes MFI des Polyethylens zum Ethylen-Propylen-Mischpolymerisat gleich oder größer 15 auf, bevorzugt jedoch größer 25. Hierbei ist es vorteilhaft, zugleich das Verhältnis der Schmelzindizes des Polyethylens zu dem des Propylen-Mischpolymerisates zwischen 0,3 und 3,0 vorzusehen. Die ternären Formmassen nach der Erfindung können auf bekannte Weise mit Hilfe der für Kunststoffe üblichen Apperaturen wie Walzen, Extruder, Mischer und Kneter hergestellt werden, wobei alle Komponenten gleichzeitig vermischt werden können. Die Vermischung ist vorteilhaft bei erhöhter Temperatur, insbesondere bei einer Temperatur zwischen 180 und 280 °C unter Einwirkung von Scherkräften durchzuführen.

3

Der erfindungsgemäßen Formmasse können zusätzlich bekannte Zusatzstoffe wie Farbmittel, Gleitmittel, Füllstoffe, Antioxydationsmittel, UV-Stabilisatoren, Flammschutzmittel, Fasern oder dgl. zugegeben werden.

Es ist auch möglich, die erfindungsgemäßen ternären Formmassen mit anderen Kunststoffen beispielsweise zur Verbesserung deren Schlagfestigkeit zuzugeben.

Die Erfindung wird nachfolgend an einigen Beispielen mit Vergleichen erläutert.

Für die Prüfung von Eigenschaften werden folgende Methoden angewendet :

MFI (230/5) g/10 Min. nach DIN 53735 oder MFI (190/2,16) Zugfestigkeit N/mm² nach DIN 53455.

Kerbschlagzähigkeit nach DIN 53453 bei verschiedenen Temperaturen, un = nicht gebrochen, g = gebrochen Bruchdehnung in % nach DIN 53455.

Vicat-Erweichungstemperatur VST/A °C.

Schrumpf gemessen nach 48 h Lagerung bei Raumtemperatur in mm.

Sofern nichts anderes angegeben ist, sind bei Angabe des MFI stets MFI (230/5) g/10 min gemeint.

### Beispiel 1

Eine als Vergleich ausgeführte binäre Mischung aus 43 Gew.-Teilen eines EPDM mit einem MFI von 0,8 wird mit 57 Gew.-Teilen Propylen-Homopolymerisat mit einem MFI 55 homogenisiert und zu einem Granulat verarbeitet. Das so hergestellte Granulat wird bei 220 bis 260 °C Massetemperatur zu einem Formteil in Gestalt eines Stoßfängers verspritzt, das eine Sollänge von 1 436 mm bei Entnahme aus der Spritzgußform aufweist. Durch Lagerung bei Raumtemperatur findet eine Nachschwindung (Schrumpfung) des Formteils statt. Nach 48 h zeigt der Stoßfänger nur noch eine Länge von 1 435,5 mm, d. h. einen Schrumpf von − 0,5 mm gegenüber Sollänge.

Weitere Eigenschaften finden sich in der Tabelle.

### Beispiel 2

Eine als Vergleich ausgeführte Mischung aus 40 Gew.-Teilen eines EPDM's mit einem MFI 0,8 wird mit 50 Gew.-Teilen eines Propylen-Homopolymerisates mit einem MFI von 55 und 10 Gew.-Teilen eines Propylen-Mischpolymeren mit einem MFI von 25 wie in Beispiel 1 homogenisiert und zu Granulat verarbeitet. Ein aus diesem Granulat unter gleichen Spritzbedingungen wie in Beispiel 1 gefertigter Stoßfänger zeigt nach 48 h Lagerung eine Länge von − 1,5 mm gegenüber Sollänge. Dieses Beispiel zeigt, daß bereits eine geringe Menge eines Propylen-Mischpolymeren eine hohe Schwindung des Formteils bewirkt.

### Beispiel 3

Eine als Vergleich ausgeführte binäre Mischung aus 36 Gew.-Teilen EPDM mit einem MFI von 0,8 und 64 Gew.-Teilen eines Propylen-Mischpolymerisates mit einem MFI von 25 wird in einem Kneter homogenisiert und zu einem Granulat verarbeitet wie in Beispiel 1 beschrieben. Das so hergestellte Granulat wird bei einer Massetemperatur von 220 bis 260 °C zu einem Formteil verspritzt, das eine Sollänge von 1 436 mm bei Entnahme aus der Spritzgußform aufweist. Nach Lagerung des Formteiles bei Raumtemperatur während 48 Stunden nach Entnahme aus der Spritzgußform zeigt das Formteil eine Nachschwindung, d. h. eine Schrumpfung von 2,5 mm gegenüber Sollänge.

Weitere Eigenschaften der binären Formmasse sind in der beigefügten Tabelle aufgeführt.

### Beispiel 4

Es wird eine weitere binäre Formmasse aus einer Mischung von 39 Gew.-Teilen EPDM mit einem MFI von 0,8 und 37 Gew.-Teilen eines Propylen-Mischpolymerisates mit einem MFI von 25 und 24 Gew.-Teilen eines Propylen-Mischpolymerisates mit einem MFI von 65 wie im Beispiel 1 beschrieben, hergestellt und zu einem Formteil, wie in Beispiel 1 beschrieben, verspritzt. Das aus der Spritzgußform entnommene Formteil zeigt nach 48 Stunden Lagerung bei Raumtemperatur bereits eine Schrumpfung in der Länge von − 1,5 mm gegenüber der anfänglichen Sollänge von 1 436 mm. Hier zeigt sich, daß auch die Verwendung eines gut fließfähigen Propylen-Mischpolymerisates mit einem hohen Schmelzindex das Schrumpfen nicht verhindert.

Weitere Eigenschaften sind in der beigefügten Tabelle aufgeführt.

### Beispiel 5

Eine erfindungsgemäße ternäre Formmasse wird aus 36 Gew.-Teilen eines EPDM mit einem MFI von 0,8 und 54 Gew.-Teilen eines Propylen-Mischpolymerisates mit einem MFI von 25 und 10 Gew.-Teilen eines Polyethylens mit einem MFI (230/5) von 30 hergestellt und zu einem Formteil verspritzt, wie im Beispiel 1 beschrieben. Nach 48 Stunden Lagerung bei Raumtemperatur zeigt das Formteil eine um + 1,5 mm vergrößerte Länge gegenüber der anfänglichen Sollänge von 1 436 mm.

Weitere Eigenschaften sind in der beigefügten Tabelle aufgeführt.

4

## Beispiel 6

Eine erfindungsgemäße ternäre Formmasse aus 38 Gew.-Teilen EPDM mit einem MFI von 0,8 und 52 Gew.-Teilen eines Propylen-Mischpolymerisates mit einem MFI von 25 und 10 Gew.-Teilen Polyethylen mit einem MFI von 30 wird wie im Beispiel 3 verarbeitet zu einem Formteil mit der Sollänge von 1 436 mm. Nach 48 Stunden Lagerung bei Raumtemperatur zeigt das Formteil eine um + 3,5 mm gegenüber der Sollänge vergrößerte Länge. Weitere Eigenschaften siehe Tabelle.

## Beispiel 7

Wie in Beispiel 1 beschrieben, wird eine als Vergleich ausgeführte binäre Mischung aus 35 Gew.- Teilen eines EPM mit einem MFI von 0,9 und 65 Gew.-Teilen eines Propylen-Mischpolymerisates mit einem MFI von 25 hergestellt und zu einem Stoßfänger verspritzt. Nach 48 Stunden Lagerung bei Raumtemperatur zeigt der Stoßfänger eine Schrumpfung von − 1,5 gegenüber Sollänge. Weitere Eigenschaften siehe Tabelle.

## Beispiel 8

Als weiteres Vergleichsbeispiel wird eine binäre Mischung aus 48 Gew.-Teilen eines EPDM mit einem MFI von 0,8 und 52 Gew.-Teilen eines Propylen-Homopolymers mit einem MFI von 55 hergestellt und analog Beispiel 1 zu einem Stoßfänger verspritzt. Nach 48 Stunden Lagerung bei Raumtemperatur zeigt der Stoßfänger eine Nachschwindung ± 0 gegenüber der Sollänge.
Weitere Angaben siehe Tabelle.

## Beispiel 9

Wie in Beispiel 1 beschrieben, wird eine erfindungsgemäße Mischung aus 38 Gew.-Teilen eines EPM mit einem MFI von 0,9 und 52 Gew.-Teilen eines Propylen-Mischpolymers mit einem MFI von 25 und 10 Gew.-Teilen Polyethylen mit einem MFI (230/5) von 30 hergestellt und zu einem Stoßfänger verspritzt. Dieser zeigt nach 48 Stunden Lagerung bei Raumtemperatur einen Schrumpf von + 1,5 mm.
Weitere Angaben siehe Tabelle.

## Beispiel 10

Als Vergleichsbeispiel wurde aus der DE-OS 28 21 342 das Beispiel 7 der Tabelle 1 übernommen. Hier wird aus 35 Gew.-Teilen eines amorphen EPDM (Kristallinität unter 0,25 % und Mooney Viskosität (ML/1 + 4) 125 °C) von 52 mit einer Zugfestigkeit von 6,5 N/mm² und 55 Gew.-Teilen eines Propylen-Blockmischpolymerisates mit 7 % Ethylen, einer Dichte von 0,905 g/cm² und einem MFI (230/2,16) von 6,0 dg/min, das entspricht einem MFI (230/5) von 24 und 10 Gew.-Teilen Polyethylen mit einer Dichte 0,963 g/cm³, MFI (190/2,16) von 8 eine Mischung hergestellt und zu einer Platte verspritzt. Die Eigenschaftswerte sind in der beigefügten Tabelle übernommen und aufgeführt. Die in der DE-OS 28 21 342 gemachten Angaben shore Härte D 54, Heatsagtest (mm) 30 ; Flachfallversuch und Zerreißkraft ergeben sich mäßige Werte für die mechanischen Eigenschaften des Formteiles, insbesondere ist die Kerbschlagzähigkeit bei tiefen Temperaturen unzureichend.

## Beispiel 11

Als weiteres Vergleichsbeispiel wurde aus der DE-OS 28 21 342 das Beispiel 7 aus der Tabelle 2 übernommen. Aus 45 Gew.-Teilen aus EPDM wie in Beispiel 11 und 50 Gew.-Teilen eines Propylen-Blockmischpolymerisates wie in Beispiel 11 und 5 Gew.-Teilen Polyethylen wie in Beispiel 11 wird eine Mischung hergestellt und zu einem Formteil verpreßt. Aus den in der DE-OS 28 21 342 gemachten Angaben zu den Eigenschaften der Platte, wie Zugfestigkeit 6,1 N/mm², Bruchdehnung % 280, Shore Härte (D) 47 ergibt sich als Gesamturteil über die mechanischen Eigenschaften ein nur mäßig befriedigender Eindruck, wobei dann die Zähigkeit bei niedrigen Temperaturen in jedem Fall unzureichend ist.

## Beispiel 12

Eine erfindungsgemäße ternäre Formmasse aus 41 Gew.-Teilen EPDM mit einem MFI von 0,8 und 49 Gew.-Teilen eines Propylen-Mischpolymers mit einem MFI von 25 und 10 Gew.-Teilen Polyethylen mit einem MFI von 30 wird wie in Beispiel 3 beschrieben verarbeitet zu einem Formteil mit der Sollänge 1 436 mm. Nach 48 Stunden Lagerung bei Raumtemperatur zeigt das Formteil eine Längenänderung von + 3 mm gegenüber der Sollänge.
Weitere Angaben siehe Tabelle.

| Bei-spiel | EPDM EPM Gew.-T. MFI (230/5) Zugfest. | PP-HO Gew.-T. MFI (230/5) | PP-CO Gew.-T. MFI (230/6) | PE Gew.-T. MFI 190/2,16 | MFI d. Mischung 230/5 | Vicat °C | Bruch-dehnung % | Zug-festl. N/mm² | °C | Kerbschlag-zähigkeit −20 °C | −40 °C | Schrumpf mm | Bewertung Vicat | Kerb. | Schrumpf |
|---|---|---|---|---|---|---|---|---|---|---|---|---|---|---|---|
| 1 | 43 0,8 24,8 | 57 55 | | | 17 | 107 | 550 | 28 | un | g | g | − 0,5 | gut | schlecht | gut |
| 2 | 40 0,8 24,8 | 50 55 | 10 25 | | 15 | 106 | 576 | 28,7 | un | g | g | − 1,5 | gut | schlecht | schlecht |
| 3 | 36 0,8 24,8 | | 64 25 | | 12,1 | 113 | 590 | 28,4 | un | un | g | − 2,5 | gut | gut | sehr schlecht |
| 4 | 39 0,8 24,8 | | 37 25 24 65 | | 6,7 | 101 | 593 | 22,2 | un | un | un | − 1,5 | mäßig | sehr gut | schlecht |
| 5 | 36 0,8 24,8 | | 54 25 | 10 7 | 10,1 | 105 | 740 | 32 | un | un | g | + 1,5 | gut | gut | gut |
| 6 | 38 0,8 24,8 | | 52 25 | 10 7 | 9,9 | 107 | 620 | 33 | un | un | un | + 3,5 | gut | sehr gut | gut |
| 7 | 35 0,9 5,75 | | 65 25 | | 9,9 | 114 | 630 | 25,6 | un | un | un | − 1,5 | gut | sehr gut | schlecht |
| 8 | 48 0,8 24,8 | 52 55 | | | 13,2 | 95 | 610 | 20,7 | un | un | g | ± 0 | schlecht | gut | gut |

0 039 397

(Fortsetzung)

| Bei-spiel | EPDM EPM Gew.-T. MFI (230/5) Zugfest. | PP-HO Gew.-T. MFI (230/5) | PP-CO Gew.-T. MFI (230/6) | PE Gew.-T. MFI 190/2,16 | MFI d. Mischung 230/5 | Vicat °C | Bruch-dehnung % | Zug-festi. N/mm² | °C | Kerbschlag-zähigkeit − 20 °C | − 40 °C | Schrumpf mm | Bewertung Vicat | Kerb. | Schrumpf |
|---|---|---|---|---|---|---|---|---|---|---|---|---|---|---|---|
| 9 | 38 0,9 5,75 | | 52 25 | 10 7 | 8 | 105 | 455 | 21,4 | un | un | un | + 1,5 | gut | sehr gut | gut |
| 10 | 35 — 6,5 | | 55 24 | 10 8 | 7,6 | 103 | | ~ 10 ① | | | | | mäßig | schlecht ② | |
| 11 | 45 — 6,5 | | 50 24 | 5 8 | 1,6 (190/10) | | 280 | 6,1 | | | | | | | |
| 12 | 41 0,8 24,8 | | 49 25 | 10 7 | 9,1 | 104 | 580 | 30,1 | un | un | un | + 3 | gut | sehr gut | gut |

① Analog zur Zerreißfestigkeit.
② Aus Hinweis spröder Bruch, was spröde ist, ist nicht kälteflexibel.

0 039 397

Kommentar zur Tabelle :

In der Tabelle sind die aufgeführten Beispiele mit den wichtigsten Eigenschaften, die etwas über das gewünschte Anforderungsprofil für so hoch beanspruchte technische Teile wie beispielsweise Stoßfänger aussagen, zusammengestellt. Der MFI der Gesamtmischung gibt einen Hinweis auf die Fließeigenschaften und damit über die Eignung zum Verarbeiten durch Spritzgießen, hier zeigen MFI-Werte ab etwa 8 die gute Verarbeitbarkeit an. Der Vicat-Wert steht für die gute Wärmeformbeständigkeit, Dehnung und Zugfestigkeit für die allgemeinen mechanischen Eigenschaften, Kerbschlagzähigkeit als Maß für die Kälteflexibilität bei extrem tiefen Temperaturen und der Schrumpfals Maß für die Güte und Maßhaltigkeit der Herstellbarkeit von Spritzguß-Formteilen. Die in der Tabelle vorgenommene Bewertung steht unter dem Gesichtspunkt eines hohen Anforderungsprofils mehrerer Eigenschaften. Es geht hieraus eindeutig hervor, daß oft einseitig gute Eigenschaftswerte mit anderen schlechten gekoppelt sind. Die vielen Vergleichsbeispiele 1 bis 4, 7, 8, 10 und 11 zeigen eindeutig, daß jeweils ein oder mehrere der gewünschten Eigenschaften unzureichend gemäß dem erfindungsgemäßen Anforderungsprofil sind und es der Erfindung, gemäß Beispielen 5, 6, 9, 12 vorbehalten ist, ein in allen gewünschten Eigenschaften gutes und sehr gutes Verhalten aufzuweisen.

Beispiele 1 und 8 zeigen, daß binäre thermoplastische Mischungen aus EPDM und Propylen-Homopolymerisat bei zu niedrigem Gehalt an EPDM keine ausreichende Kälteflexibilität (Beisp. 1) und bei höherem Gehalt an EPDM eine niedrige Wärmeformbeständigkeit (Beisp. 8) aufweisen. Eine Optimierung der gewünschten Eigenschaften ist nicht möglich.

Beispiel 2 zeigt, daß durch Zusatz von Propylen-Mischpolymeren zu Mischungen gemäß Beispiel 1 die Nachschwindung der Formteile ungünstig beeinflußt, d. h. vergrößert wird, im übrigen aber auch keine sonstigen Verbesserungen der gewünschten Eigenschaftswerte auftreten.

Beispiel 3 zeigt, daß binäre Mischungen aus EPDM und Propylen-Mischpolymeren in Bezug auf die Kälteflexibilität Mischungen gemäß Beispiel 1 mit Propylen-Homopolymeren überlegen sind, jedoch erheblichen Schrumpf aufweisen, was sich nachteilig auf die Verarbeitbarkeit zu maßhaltigen Spritzgußformteilen mit komplizierter Gestalt auswirkt.

Beispiel 4 zeigt im Vergleich zu Beispiel 3, daß der Zusatz von sehr gut fließfähigem Propylen-Mischpolymeren (MFI 65) den Nachteil eines zu hohen Schrumpfes nicht ausgleichen kann.

Beispiel 5 einer erfindungsgemäßen Formmasse zeigt ein ausgewogenes Eigenschaftsbild gegenüber den binären Formmassen nach den vorangehenden Beispielen. Der MFI der Formmasse von 10 zeigt die sehr gute Verspritzbarkeit an, die mechanischen Eigenschaften Zugfestigkeit, Bruchdehnung sind ebenfalls als gut zu bezeichnen, die Kerbschlagzähigkeit ist bis − 30 °C vorhanden.

Das Beispiel 6 zeigt, daß die Eigenschaften der erfindungsgemäßen Formmasse durch geringe Erhöhung des EPDM-Anteils zu Lasten des Propylen-Mischpolymeren weiter verbessert werden können, insbesondere was die Kälteflexibilität und den Schrumpf betrifft. Überraschend ist hierbei, daß die gute Wärmeformbeständigkeit erhalten bleibt (im Gegensatz zu dem Verhalten gemäß Beispiel 1 und 8).

Das Beispiel 7 belegt eine binäre Formmasse auf Basis EPM mit Propylen-Mischpolymer. Hier zeigen sich analoge Eigenschaftsbilder zu den binären Formmassen auf Basis EPDM, wobei das Schrumpfverhalten ungünstig ist und damit die Spritzarbeit komplizierter Formteile mit hoher Maßgenauigkeit in Frage gestellt wird.

Erst die erfindungsgemäße ternäre Formmasse gemäß Beispiel 9 auf Basis EPM zeigt gute und sehr gute Eigenschaftswerte in allen geforderten Bereichen, wobei durch weitere Erhöhung des EPM-Anteils die Verspritzbarkeit noch weiter verbessert werden kann, bei Erhalt der übrigen Eigenschaftswerte.

Die Beispiele 10 und 11 zeigen die bekannten ternären Formmassen, die auf amorphen bzw. nahezu amorphen Ethylen-Propylen-Mischpolymerisaten aufbauen und die ein völlig anderes Eigenschaftsbild ergeben, insbesondere nicht die hohen mechanischen Eigenschaften wie Bruchdehnung und Zugfestigkeit und in keinem Fall die gewünschte hohe Kältflexibilität vorweisen können.

## Patentansprüche

1. Ternäre Formmasse auf Basis von Ethylen-Propylen-Mischpolymerisat, Propylen-Mischpolymer und Polyethylen gekennzeichnet durch einen Schmelzindex MFI (230/5) der Formmasse von mindestens 8 g/10 min enthaltend

a) 35 bis 43 Gew.-% eines teilkristallinen Ethylen-Propylen-Mischpolymerisates mit einem Ethylengehalt von mindestens 65 Gew.-% ; einem Schmelzindex MFI (230/5) von 0,7 bis 2,0 g/10 min und einer Zugfestigkeit größer 5,0 N/mm$^2$,

b) 40 bis 60 Gew.-% Propylen-Mischpolymer mit einem Ethylen-Gehalt von unter 12 Gew.-% und Schmelzindex MFI (230/5) von 15 bis 50 g/10 min und

c) 5 bis 20 Gew.-% Polyethylen mit einem Schmelzindex MFI (230/5) von 15 bis 50 g/10 min.

2. Formmasse nach einem der Ansprüche 1 oder 2, dadurch gekennzeichnet, daß ein Propylen-Mischpolymeres mit einem Schmelzindex MFI (230/5) zwischen 20 und 40 vorgesehen ist.

3. Formmasse nach Anspruch 1, dadurch gekennzeichnet, daß ein Ethylen-Propylen-Mischpolymer und/oder ein Ethylen-Propylen-Terpolymer aus

65 bis 82 Gew.-% Ethylen
18 bis 35 Gew.-% Propylen
0 bis 8 Gew.-% Terkomponente

vorgesehen sind.

4. Formmasse nach Anspruch 3, dadurch gekennzeichnet, daß ein Ethylen-Propylen-Mischpolymerisat mit mehr als 70 Gew.-% Ethylengehalt vorgesehen ist.

5. Formmasse nach Anspruch 3 oder 4, dadurch gekennzeichnet, daß Ethylen-Propylen-Terpolymere mit einer Zugfestigkeit von mindestens 8 N/mm², vorzugsweise größer 20 N/mm², vorgesehen sind.

6. Verwendung einer Formmasse nach einem der Ansprüche 1 bis 5 zum Herstellen von Stoßfängern (-stangen) durch Spritzgießen für Kraftfahrzeuge.

## Claims

1. Ternary moulding composition based on ethylene-propylene copolymer, propylene copolymer and polyethylene, characterised by a melt index MFI (230/5) of the moulding composition of at least 8 g/10 min, the moulding composition, containing
   a) 35 to 43 weight % of a partially crystalline ethylene-propylene copolymer with an ethylene content of at least 65 weight % ; a melt index MFI (230/5) of 0.7 to 2.0 g/10 min and a tensile strength greater than 5.0 N/mm²,
   b) 40 to 60 weight % of propylene copolymer with an ethylene content of below 12 weight % and melt index MFI (230/5) of 15 to 50 g/10 min and
   c) 5 to 20 weight % of polyethylene with a melt index MFI (230/5) of 15 to 50 g/10 min.

2. Moulding composition according to one of claims 1 or 2, characterised in that a propylene copolymer with a melt index MFI (230/5) between 20 and 40 is provided.

3. Moulding composition according to claim 1, characterised in that an ethylene-propylene copolymer and/or an ethylene-propylene copolymer of

65 to 82 weight % ethylene
18 to 35 weight % propylene
0 to 8 weight % tercomponent

are provided.

4. Moulding composition according to claim 3, characterised in that an ethylene-propylene copolymer with more than 70 weight % ethylene content is provided.

5. Moulding composition according to claim 3 or 4, characterised in that ethylene-propylene terpolymers with a tensile strength of at least 8 N/mm², preferably greater than 20 N/mm², are provided.

6. Use of a moulding composition according to one of claims 1 to 5 for the production of bumpers for motor vehicles by injection moulding.

## Revendications

1. Masse à mouler ternaire à base de copolymère de l'éthylène et du propylène, de copolymère du propylène et de polyéthylène, caractérisée par un indice de fluidité à chaud MFI (230/5) de la masse à mouler d'au moins 8 g/10 min, contenant
   a) 35 à 43 % en poids d'un copolymère éthylène-propylène partiellement cristallin ayant une teneur en éthylène d'au moins 65 % en poids, un indice de fluidité à chaud MFI (230/5) de 0,7 à 2,0 g/10 min et une résistance à la traction supérieure à 5,0 N/mm²,
   b) 40 à 60 % d'un copolymère du propylène ayant une teneur en éthylène inférieure à 12 % en poids et un indice de fluidité à chaud MFI (230/5) de 15 à 50 g/10 min, et
   c) 5 à 20 % en poids d'un polyéthylène ayant un indice de fluidité à chaud MFI (230/5) de 15 à 50 g/10 min.

2. Masse à mouler selon la revendication 1, caractérisée en ce qu'il est prévu un copolymère du propylène ayant un indice de fluidité à chaud MFI (230/5) compris entre 20 et 40.

3. Masse à mouler selon la revendication 1, caractérisée en ce qu'il est prévu un copolymère éthylène-propylène et/ou un terpolymère de l'éthylène et du propylène constitué de

65 à 82 % en poids d'éthylène,
18 à 35 % en poids de propylène,
0 à 8 % en poids d'un troisième constituant.

4. Masse à mouler selon la revendication 3, caractérisée en ce qu'il est prévu un copolymère éthylène-propylène contenant plus de 70 % en poids d'éthylène.

9

5. Masse à mouler selon l'une des revendications 3 et 4, caractérisée en ce qu'il est prévu des terpolymères de l'éthylène et du propylène ayant une résistance à la traction d'au moins 8 N/mm², de préférence supérieure à 20 N/mm².

6. Utilisation d'une masse à mouler selon l'une des revendications 1 à 5, pour la fabrication de pare-chocs pour automobile par moulage par injection.